(19) Europäisches Patentamt
European Patent Office
Office européen des brevets

(11) **EP 1 146 668 B1**

(12) **EUROPEAN PATENT SPECIFICATION**

(45) Date of publication and mention
of the grant of the patent:
**18.05.2016 Bulletin 2016/20**

(51) Int Cl.:
*H04B 1/707* (2006.01)      *H04W 52/10* (2009.01)
*H04W 52/42* (2009.01)      *H04W 52/14* (2009.01)
*H04W 52/22* (2009.01)

(21) Application number: **00977949.7**

(22) Date of filing: **27.11.2000**

(86) International application number:
**PCT/JP2000/008336**

(87) International publication number:
**WO 2001/041331 (07.06.2001 Gazette 2001/23)**

(54) **COMMUNICATION TERMINAL, BASE STATION SYSTEM, AND METHOD OF CONTROLLING TRANSMISSION POWER**

KOMMUNIKATIONSENDGERÄT, BASISSTATIONSSYSTEM UND VERFAHREN ZUR STEUERUNG DER ÜBERTRAGUNGSSTÄRKE

TERMINAL DE COMMUNICATION, SYSTEME DE STATION DE BASE ET PROCEDE DE COMMANDE DE LA PUISSANCE DE TRANSMISSION

(84) Designated Contracting States:
**DE FR GB**

(30) Priority: **29.11.1999   JP 33762399**
         **17.03.2000   JP 2000076032**

(43) Date of publication of application:
**17.10.2001 Bulletin 2001/42**

(73) Proprietor: **Inventergy, Inc.**
**Cupertino, CA 95014 (US)**

(72) Inventors:
• **KITADE, Takashi**
**Yokosuka-shi, Kanagawa 239-0847 (JP)**
• **MIYA, Kazuyuki**
**Asao-ku, Kawasaki-shi, Kanagawa 215-0021 (JP)**
• **HIRAMATSU, Katsuhiko**
**Yokosuka-shi, Kanagawa 238-0031 (JP)**
• **KATO, Osamu**
**Yokosuka-shi, Kanagawa 237-0066 (JP)**

(74) Representative: **Eisenführ Speiser**
**Patentanwälte Rechtsanwälte PartGmbB**
**Johannes-Brahms-Platz 1**
**20355 Hamburg (DE)**

(56) References cited:
**EP-A- 0 987 834      WO-A1-99/07090**
**GB-A- 2 297 224      JP-A- 11 284 565**
**JP-A- 2000 091 986**

• **PANASONIC: "Performance Analysis on OL-TPC based on parallel transmitted Midamble1" 3GPP DRAFT; R1-99C19, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Hannover; 19990830, 30 August 1999 (1999-08-30), XP050089413**
• **INTERDIGITAL COMMUNICATIONS CORPORATION: "Performance of Weighted Open Loop Scheme for Uplink Power Control in TDD Mode" 3GPP DRAFT; R1-99575, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. CHEJU; 19990601, 28 May 1999 (1999-05-28), XP050088806**
• **SALMASI A., GILHOUSEN K.S.: 'On the system design aspects of code dicision multiple access (CDMA) applied to digital cellular and personal communications networks' VEHICULAR TECHNOLOGY CONFERENCE, GATEWAY TO THE FUTURE TECHNOLOGY IN MOTION., 41ST IEEE 1991, pages 57 - 62, XP002936789**

- INTERDIGITAL COMMUNICATIONS CORPORATION: "Issues Regarding Open Loop Schemes for Uplink Power Control in TDD", 3GPP DRAFT; R1-99576, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. CHEJU; 19990531, 31 May 1999 (1999-05-31), XP050088807, [retrieved on 1999-05-31]

- EDITOR: "Update of specification document TS25.221", 3GPP DRAFT; R1-99A25, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Espoo, Finland; 19990721, 21 July 1999 (1999-07-21), XP050089229, [retrieved on 1999-07-21]

**Description**

Technical Field

The present invention relates to a communication terminal apparatus that performs transmission power control of an open loop and a transmission power control method.

Background Art

CDMA (Code Division Multiple Access), which is one of multiple access of a radio transmission system, is a method for spreading a spectrum of an information signal to a sufficiently wide band as compared with an original information bandwidth to be transmitted thereto, and it is capable of increasing spectrum efficiency highly, and accommodating numerous users.

In CDMA, however, there is a near-far problem, specifically, in the case where a desired transmitting station is located at a far place and an undesired transmitting station (interference 25 station) is located at a near place, reception power of a signal transmitted from the interference station is increased by reception power of a signal transmitted from the desired transmitting station, and this makes it impossible to suppress cross-correlation between spread codes by only processing gain to make it impossible to perform communications.

Hence, a cellular system using CDMA needs transmission power control according to a state of each transmission channel in a reverse link. Moreover, in a terrestrial mobile communication, transmission power control for making compensation for a variation in a momentary value of reception power is needed as measures against fading, which is a cause of deteriorating channel quality.

Herein, a duplex system in multiple access includes TDD (Time Division Duplex) and FDD (Frequency Division Duplex).

TDD is a system that time-divides the same radio frequency into a reverse link and a forward link to perform communication, and frequency correlation properties relating to fading variations between transmitting signal and received signal are 1 since the transmission and reception are in the same band. Then, in the case where switching time between both is sufficiently short, it is possible to perform transmission control of the open loop that controls transmission power based on reception power at a communication terminal since TDD has a high cross-correlation in time in a propagation path state such as a fading variation and the like.

Also, in FDD that performs communications at different frequencies between the reverse link and the forward link, when the communication terminal originates a call using RACH (Random Access Channel), transmission power value is determined by transmission power control of the open loop based on a transmission power value of a broadcast channel notified by the broadcast channel, an interference power value at a base station, a target power value at a base station reception end, and reception power of the broadcast channel.

European patent application EP 0 987 834 constitutes an Article 54(3) EPC document and discloses a diversity transmission/reception apparatus with which transmit power control errors are reduced to a small level when the basis station performs reception through a plurality of antennas. In particular, said prior art achieves the reduction of errors by measuring and combining the received signal power from the antennas and controlling the transmission power based on said combined received signal.

The 3GPP document from Panasonic: "Performance Analysis on OL-TPC based on Parallel Transmitted Midamble", 3GPP Draft: R1-99C19, MOBILE COMPETENCE CENTER 650, ROUTE DE LUCIOLES; F-06921 SOPHIA-ANTIPOLIS CEDEX; FRANCE, vol. RAN WG1, no. Hannover; 30 August 1999 refers to a performance analysis based on parallel transmitted midambles. Said 3GPP draft suggests transmitting the midamble from parallel antennas at the node B combining the received signal power transmitted from diversity antennas, thus giving a good bit error ratio at the node B.

The following will explain the conventional CDMA base station and communication terminal that perform transmission power control of the open loop with reference to the drawings.

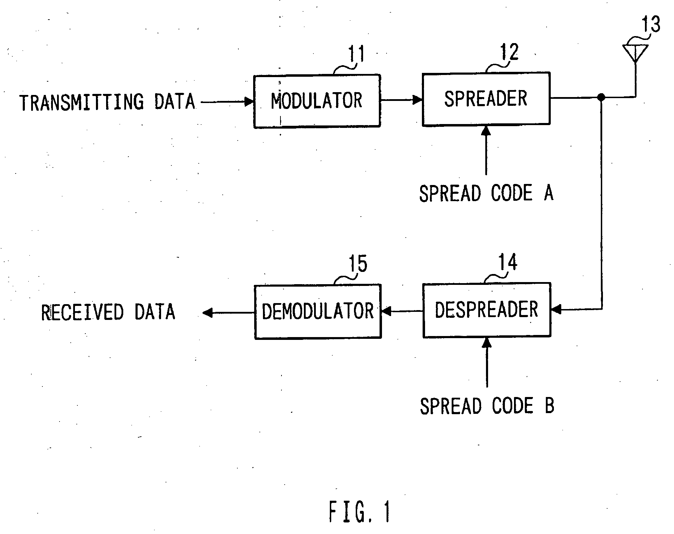

FIG. 1 is a block diagram illustrating the configuration of the conventional base station. The base station illustrated in FIG. 1 comprises a modulator 11 for modulating transmitting data, a spreader 12 for multiplying the modulated signal by spread code A to spread the resultant, an antenna 13 for receiving and transmitting the signal, a despreader 14 for multiplying the received signal by spread code B to despread the resultant, and a demodulator 15 for demodulating the despread signal.

Transmitted data is modulated by the modulator 11 and the modulated data is spread by the spreader 12 using spread code A, and the resultant is transmitted via the antenna 13.

The signal received via the antenna 13 is subjected to despread processing by the despreader 14 using spread code B, and the despread signal is demodulated by the demodulator 15 to extract received data.

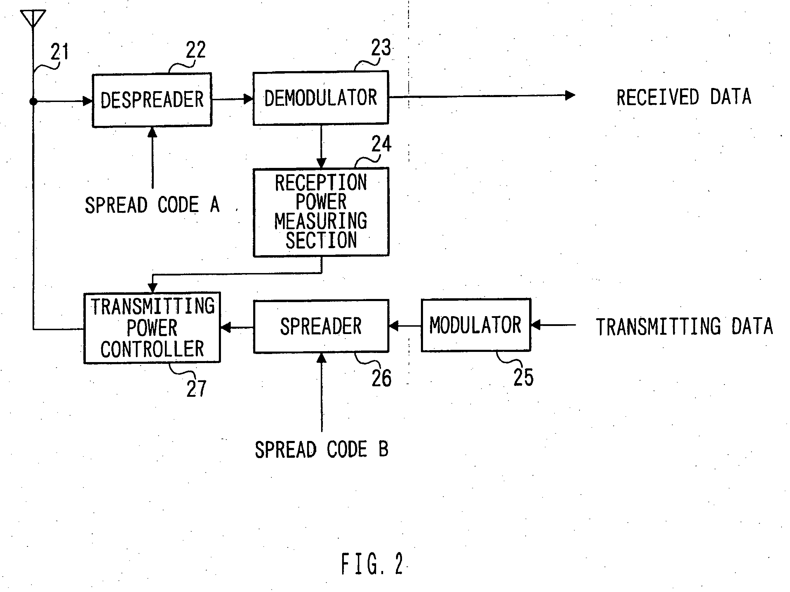

FIG. 2 is a block diagram of the configuration of the conventional communication terminal. The communication terminal illustrated in FIG. 2 comprises an antenna 21 for receiving and transmitting a signal, a despreader 22 for multiplying the received signal by spread code A to despread the resultant, a demodulator 23 for demodulating the despread signal, a reception power measuring section 24 for measuring a reception power value from the demodulation result, a modulator 25 for modulating transmitted data, a spreader 26 for multiplying the modulated signal by spread code B, and transmission power controller 27 for performing transmission power control based on the reception power value and the like.

Herein, the reception power measuring section 24 provides average processing to the measured reception power value in order to suppress the momentary variation of the reception power value caused by fading and the like, and outputs the reception power average value to the transmission power controller 27.

The signal received via the antenna 21 is subjected to despread processing by the despreader 22 using spread code A, and the despread signal is demodulated by the demodulator 23, so that received data is extracted and the demodulation result is outputted to the reception power measuring section 24. Then, reception power is measured from the demodulation result by the reception power measuring section 24 and the measurement result is inputted to the transmission power controller 27, and a transmission power value is determined by the transmission power controller 27 based on the reception power value and the like.

Transmitted data is modulated by the modulator 25, and the modulated data is subjected to spread processing by the spreader 26 using spread code B. Power is amplified by the transmission power controller 27 based on the determined transmission power value, and the resultant is transmitted as a radio signal from the antenna 21.

In this way, according to the conventional radio transmission system, the base station transmits a signal from one antenna, and the communication terminal performs transmission power control of the open loop based on the reception power of the received signal.

However, since the communication terminal of the conventional radio transmission system provides average processing to the measured reception power value, it takes much time to suppress the momentary variation to calculate a high accurate reception power average value when the fading variation is slow, and this causes a problem in which transmission power control of the open loop cannot be performed at high speed and with high accuracy.

Disclosure of Invention

It is an object of the present invention to provide a communication terminal apparatus and a transmission power control method that are capable of calculating a reception power average value at high speed and with high accuracy even when a fading variation is slow, and are capable of performing transmission power control of an open loop at high speed and with high accuracy.

To this end, the invention suggests a communication terminal apparatus according to claim 1 and a transmission power control method according to claim 2.

In particular, the object can be attained when signals orthogonal to each other are transmitted as radio signals from different antennas placed in parallel at the base station side, and reception power of the respective received signals are measured and combined and transmission power control of the open loop is performed based on the combined reception power at the communication terminal side.

Brief Description of Drawings

FIG. 1 is a block diagram illustrating the configuration of the conventional base station;
FIG. 2 is a block diagram illustrating the configuration of the conventional communication terminal;
FIG. 3 is a block diagram illustrating the configuration of the base station according to one aspect of the present invention; and
FIG. 4 is a block diagram illustrating the configuration of the communication terminal according to the above embodiment.

Best Mode for Carrying Out the Invention

An embodiment of the present invention will be specifically explained with reference to the drawings accompanying herewith.

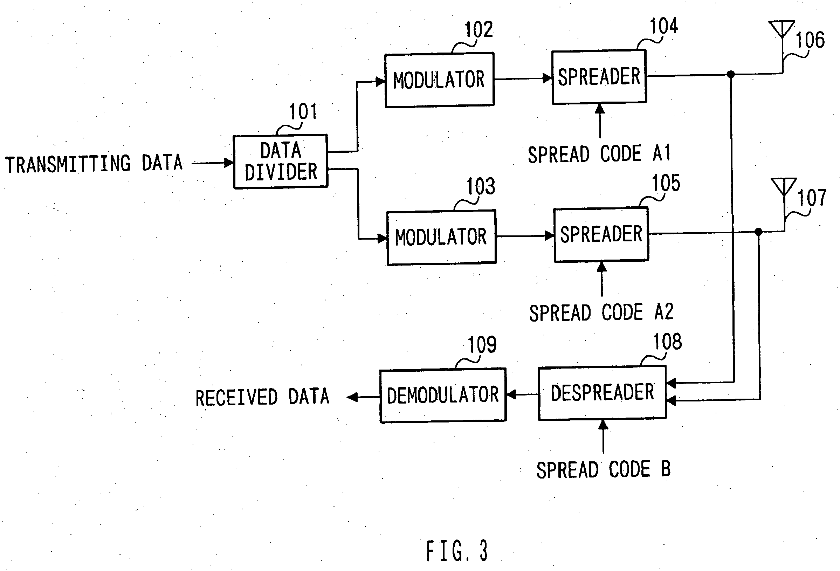

FIG. 3 is a block diagram illustrating the configuration of the base station according to one aspect of the present invention. Additionally, in the following explanation, it is assumed that a transmission sequence of the base station is 2 in order to simplify the explanation.

In the base station illustrated in FIG. 2, a data divider 101 divides transmitting data to the amounts corresponding to the number of antennas. A data dividing method includes a method for dividing data by serial/parallel conversion or a method for simply dividing the same data in order to be transmitted from each antenna, and the like.

A modulator 102 and a modulator 103 modulate transmitting data divided and a spreader 104 multiplies the modulated signal by spread code A1 and spreads the resultant. A spreader 105 multiplies the modulated signal by spread code A2 and spreads the resultant. Here, spread code A1 and spread code A2 are codes, which are orthogonal to each other. Multiplication of signals by the spread codes, which are orthogonal to each other, establishes the relationship in which an output signal of the spreader 104 and an output signal of the spreader 105 are orthogonal to each other.

An antenna 106 transmits the output signal of the spreader 104 as a radio signal, and an antenna 107 transmits the output signal of the spreader 105 as a radio signal. Also, the antenna 106 and the antenna 107 receive the signals transmitted from the communication terminal.

A despreader 108 multiplies the received signal by spread code B and despreads the resultant, and a demodulator 109 demodulates the despread signal and extracts received data.

An explanation will be next given of the flow of the signals transmitted and received at the base station of FIG. 3. Transmitted data is divided to the amounts corresponding to the plurality of antennas and modulated by the modulator 102 and the modulator 103, and the modulated data is inputted into the spreader 104 and the spreader 105. Then, the spreader 104 and the spreader 105 spread respective divided data using spread code sequences, which are orthogonal to each other, respectively.

The spread signals are transmitted in parallel from the antenna 106 and the antenna 107. In addition, radio signals transmitted in parallel from the different antennas are subjected to the fading variations, which are independent of each other.

The signals received by the antenna 106 and the antenna 107 are subjected to despread processing by the despreader 108 using spread code B. The despread signals are demodulated by the demodulator 109, so that received data is extracted.

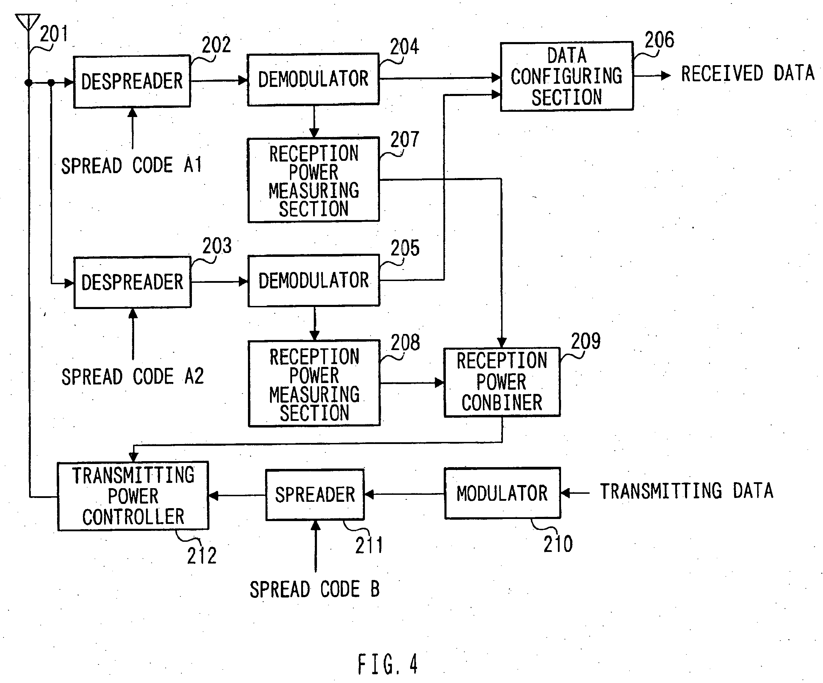

An explanation will be next give of the configuration of the communication terminal according to this embodiment with reference to the block diagram illustrated in FIG. 4.

As the communication terminal illustrated in FIG. 4, an antenna 201 transmits a signal as a radio signal, and receives a signal transmitted from the base station. A despreader 202 and a despreader 203 multiply the received signals by the same codes as spread code A1 and spread code A2 used in the transmitting side, and despread the resultants, respectively. A demodulator 204 demodulates the signals despread by use of spread code A1 and a demodulator 205 demodulates the signals despread by use of spread code A2, and a data configuring section 206 configures demodulated data back to the previous data format to which no data division is subjected.

A reception power measuring section 207 measures reception power from the demodulation result of the demodulator 204, and averages them. A reception power measuring section 208 measures reception power from the demodulation result of the demodulator 205, and averages them. It is noted that a reception power measuring section 207 and a reception power measuring section 208 generally measure reception power of a known signal portion such as a Pilot Symbol, a Midamble, and the like.

A reception power combiner 209 combines the reception power average values calculated by the reception power measuring sections 207 and the reception power measuring section 208. The method for combining reception power includes a simply calculating method, a method for weighting the respective reception power and adding them thereafter, and the like. In the case of weighting the respective reception power and adding them thereafter, transmission power can be controlled accurately as compared with the case of using the value obtained by simply adding the reception power of the respective data.

A modulator 210 modulates transmitting data. A spreader 211 multiplies the modulated signal by spread code B and spreads the resultant. A transmission power controller 212 determines a transmission power value $P_{UE}$, which is given by the following expression (1), based on the combined reception power average value and the like, and amplifies power of the transmitting signal to the corresponding transmission power value.

$$P_{UE} = L_p + I_{BTS} + C \qquad \dots (1)$$

where Lp is a propagation loss, which is a difference between the transmission power value of the base station and the reception power average value combined by the reception power combiner 209, $I_{BTS}$ is an interference power value at the base station, and C is a constant. Additionally, the value of C is taught to the communication terminal apparatus from the base station apparatus via a layer 3.

An explanation will be next given of the flow of the signal transmitted and received at the communication terminal of FIG. 4. The signal received by the antenna 201 is subjected to despread processing by use of spread code A1 at the despreader 202, and is subjected to despread processing by use of spread code A2 at the despreader 203, respectively.

The signal despread by use of spread code A1 is demodulated by the demodulator 204, and the demodulation result is inputted to the reception power measuring section 207. The signal despread by use of spread code A2 is demodulated by the demodulator 205, and the demodulation result is inputted to the reception power measuring section 208. The data configuring section 206 configures demodulated data back to the pervious data format to which no data division is subjected, obtaining received data.

Moreover, reception power is measured by the reception power measuring section 207 based on the demodulation result of the demodulator 204 and reception power is measured by the reception power measuring section 208 based on the demodulation result of the demodulator 205, and the measurement results of the receptive reception power is inputted to the reception power combiner 209.

Then, the respective reception power values are combined by the reception combiner 209, and the transmission power controller 212 determines a transmission power value based on the combined reception power, the transmission power value of the base station, and the target reception power value at the base station.

Transmitting data is modulated by the modulator 210, and the modulated data is subjected to spread processing at the spreader 211 by use of spread code B. Then, the spread transmitting signal is amplified to the corresponding transmission power value by the transmission power controller 212, and the resultant is transmitted as a radio signal from the antenna 201.

Hence, transmission of signals, which are orthogonal to each other, from the different antennas at the base station side makes it possible to measure reception power of the plurality of received signals whose fading conditions are independent of each other at the communication terminal side. This makes it possible to reduce the time which lapses before the momentary variation is suppressed.

Additionally, the above embodiment has used the method in which the respective transmitting signals are multiplied by the spread codes orthogonal to each other in order to explain the method for making the respective transmitting signals orthogonal to each other. The present invention, however, can obtain the same effect by making the transmitting signals orthogonal to each other using the other method, for example, in which the transmitting signals orthogonal to each other are multiplied by the same spread code.

As is obvious from the above explanation, according to the present invention, the signals, which are orthogonal to each other, are transmitted from the different antennas at the base station side, and reception power of the plurality of received signals whose fading conditions are independent of each other is measured at the communication terminal side. This makes it possible to reduce the time which lapses before the momentary variation is suppressed, and to perform transmission power control of the open loop at high speed and with high accuracy even when the fading variation is small.

This application is based on the Japanese Patent Application No. HEI 11-337623 filed on November 29, 1999, and the Japanese Patent Application No. 2000-076032 filed on March 17, 2000.

Industrial Applicability

The present invention is suitable for use in a communication terminal apparatus that performs transmission power control of an open loop and a base station apparatus in a CDMA radio communication system.

**Claims**

1.  A communication terminal apparatus for receiving a plurality of signals that are transmitted in parallel from different antennas (106, 107) of a base station apparatus, the plurality of signals comprising data divided by the base station apparatus to amounts corresponding to the number of antennas of the base station, and spread by respective spreading code sequences (A1, A2) orthogonal to each other, the communication terminal apparatus comprising:

    a plurality of despreaders (202, 203) for despreading the plurality of signals by the respective spreading code sequences;
    a plurality of demodulaters (204, 205) for demodulating the plurality of despread signals and obtaining a plurality of demodulated data;
    a data configuring section (206) for configuring the plurality of demodulated data-back to the format before data division was performed at the base station apparatus and obtaining received data;
    a plurality of reception power measuring sections (207, 208) for measuring respective reception power of the demodulated data and averaging the respective reception power, and obtaining a plurality of reception power average values;
    a reception power combiner (209) for combining the plurality of reception power average values; and
    a transmission power controller (212) for performing open loop transmission power control by a value obtained by adding interference power at the base station apparatus and a predetermined constant to a propagation loss which is a difference between transmission power of the base station apparatus and the combined reception power average value.

2. A transmission power control method performed by a communication terminal apparatus for receiving a plurality of signals that are transmitted in parallel from different antennas (106, 107) of a base station apparatus, the plurality of signals comprising data divided by the base station apparatus to amounts corresponding to the number of antennas of the base station, and spread by respective spreading code sequences (A1, A2) orthogonal to each other, the transmission power control method comprising the steps of:

performing despreading processing of the plurality of signals by the respective spreading code sequences;
demodulating the plurality of despread signals and obtaining a plurality of demodulated data;
configuring the plurality of demodulated data back to the format before data division was performed at the base station apparatus, and obtaining received data;
measuring respective reception power of the demodulated data;
averaging the respective reception power, and obtaining a plurality of reception power average values;
combining the plurality of reception power average values; and
performing open loop transmission power control by a value obtained by adding interference power at the base station apparatus and a predetermined constant to a propagation loss which is a difference between transmission power of the base station apparatus and the combined reception power average value.

**Patentansprüche**

1. Ein Kommunikationsendgerät zum Empfangenen einer Mehrzahl von Signalen, die parallel von verschiedenen Antennen (106, 107) einer Basisstationseinrichtung gesendet werden, wobei die Mehrzahl der Signale Daten umfassen, die von der Basisstationseinrichtung in Mengen geteilt werden, die der Anzahl von Antennen der Basisstation entsprechen, und durch jeweilige zueinander orthogonale Spreizcodesequenzen (A1, A2) gespreizt werden, wobei das Kommunikationsendgerät umfasst:

eine Mehrzahl von Entspreizern (202, 203) zum Entspreizen der Mehrzahl von Signalen durch die jeweiligen Spreizcodesequenzen;
eine Mehrzahl von Demodulatoren (204, 205) zum Demodulieren der Mehrzahl von entspreizten Signalen und zum Erhalten einer Mehrzahl von demodulierten Daten;
einen Datenkonfigurationsabschnitt (206) zum Konfigurieren der Mehrzahl der demodulierten Daten zurück zu dem Format, bevor die Datenteilung in der Basisstationseinrichtung vorgenommen wurde, und zum Erhalten von empfangenen Daten;
eine Mehrzahl von Empfangsleistungs-Messabschnitten (207, 208) zum Messen einer jeweiligen Empfangsleistung der demodulierten Daten und zum Mitteln der jeweiligen Empfangsleistung und zum Erhalten einer Mehrzahl von Empfangsleistungs-Mittelwerten;
einen Empfangsleistungskombinierer (209) zum Kombinieren der Mehrzahl der Empfangsleistungs-Mittelwerten; und
einen Sendeleistungscontroller (212) zum Ausführen einer Open-Loop-Sendeleistungssteuerung anhand eines Werts, der erhalten wird durch Addieren einer Interferenzleistung an der Basisstationseinrichtung und einer vorgegebenen Konstante zu einem Pfadverlust, der eine Differenz zwischen einer Sendeleistung der Basisstationseinrichtung und des kombinierten Empfangsleistungs-Mittelwerts ist.

2. Ein Sendeleistungs-Steuerungsverfahren, das in einem Kommunikationsendgerät zum Empfangenen einer Mehrzahl von Signalen durchgeführt wird, die parallel von verschiedenen Antennen (106, 107) einer Basisstationseinrichtung gesendet werden, wobei die Mehrzahl der Signale Daten umfassen, die von der Basisstationseinrichtung in Mengen geteilt werden, die der Anzahl von Antennen der Basisstation entsprechen, und durch jeweilige zueinander orthogonale Spreizcodesequenzen (A1, A2) gespreizt werden, wobei das Sendeleistungs-Steuerungsverfahren die folgenden Schritte umfasst:

Durchführen einer Entspreizverarbeitung der Mehrzahl von Signalen durch die jeweiligen Spreizcodesequenzen;
Demodulieren der Mehrzahl von entspreizten Signalen und Erhalten einer Mehrzahl von demodulierten Daten;
Konfigurieren der Mehrzahl der demodulierten Daten zurück zu dem Format, bevor die Datenteilung in der Basisstationseinrichtung vorgenommen wurde, und Erhalten von empfangenen Daten;
Messen einer jeweiligen Empfangsleistung der demodulierten Daten;
Mitteln der jeweiligen Empfangsleistung und Erhalten einer Mehrzahl von Empfangsleistungs-Mittelwerten;
Kombinieren der Mehrzahl der Empfangsleistungs-Mittelwerte; und
Ausführen einer Open-Loop-Sendeleistungssteuerung anhand eines Werts, der erhalten wird durch Addieren einer Interferenzleistung an der Basisstationseinrichtung und einer vorgegebenen Konstante zu einem Pfadverlust, der eine Differenz zwischen einer Sendeleistung der Basisstationseinrichtung und des kombinierten Empfangsleistungs-Mittelwerts ist.

## Revendications

1. Appareil terminal de communication destiné à recevoir une pluralité de signaux qui sont transmis en parallèle depuis des antennes différentes (106, 107) d'un appareil de station de base, la pluralité des signaux comprenant des données divisées par l'appareil de station de base en des quantités correspondant au nombre d'antennes de la station de base, et étalées par des séquences de codes d'étalement respectives (A1, A2) orthogonales les unes aux autres, l'appareil terminal de communication comprenant :

   une pluralité de dispositifs de désétalement (202, 203) pour désétaler la pluralité des signaux par les séquences de codes d'étalement respectives ;
   une pluralité de démodulateurs (204, 205) pour démoduler la pluralité des signaux désétalés et obtenir une pluralité de données démodulées ;
   une section de configuration de données (206) pour configurer la pluralité des données démodulées de nouveau vers le format avant que la division des données ait été réalisée dans l'appareil de station de base et pour obtenir des données reçues ;
   une pluralité de sections de mesure de la puissance de réception (207, 208) pour mesurer une puissance de réception respective des données démodulées et calculer la moyenne de la puissance de réception respective, et obtenir une pluralité de valeurs moyennes de la puissance de réception ;
   un combineur de puissance de réception (209) pour combiner la pluralité de valeurs moyennes de la puissance de réception ; et
   un contrôleur de puissance d'émission (212) pour réaliser une commande de puissance d'émission en boucle ouverte par une valeur obtenue par une addition d'une puissance d'interférence dans l'appareil de station de base et d'une constante prédéterminée à une perte de propagation qui est une différence entre la puissance d'émission de l'appareil de station de base et la valeur moyenne de la puissance de réception combinée.

2. Procédé de commande de puissance d'émission réalisé par un appareil terminal de communication pour recevoir une pluralité de signaux qui sont émis en parallèle depuis des antennes différentes (106, 107) d'un appareil de station de base, la pluralité des signaux comprenant des données divisées par l'appareil de station de base en des quantités correspondant au nombre d'antennes de la station de base, et étalées par des séquences de codes d'étalement respectives (A1, A2) orthogonales les unes aux autres, le procédé de commande de puissance d'émission comprenant les étapes suivantes :

   la réalisation d'un processus de désétalement de la pluralité des signaux par les séquences de codes d'étalement respectives ;
   la démodulation de la pluralité des signaux désétalés et l'obtention d'une pluralité de données démodulées ;
   la configuration de la pluralité de données démodulées de nouveau vers le format avant que la division des données ait été réalisée dans l'appareil de station de base, et l'obtention des données reçues ;
   la mesure de la puissance de réception respective des données démodulées ;
   le calcul de la moyenne de la puissance de réception respective et l'obtention d'une pluralité de valeurs moyennes de la puissance de réception ;
   la combinaison de la pluralité des valeurs moyennes de la puissance de réception ; et
   la réalisation d'une commande de puissance d'émission en boucle ouverte par une valeur obtenue par addition d'une puissance d'interférence dans l'appareil de station de base et d'une constante prédéterminée à une perte de propagation qui est une différence entre une puissance d'émission de l'appareil de station de base et la valeur moyenne combinée de la puissance de réception.

TRANSMITTING DATA $\longrightarrow$ | MODULATOR | 11 $\longrightarrow$ | SPREADER | 12 $\longrightarrow$ ▽ 13

SPREAD CODE A

RECEIVED DATA $\longleftarrow$ | DEMODULATOR | 15 $\longleftarrow$ | DESPREADER | 14 $\longleftarrow$

SPREAD CODE B

FIG. 1

FIG. 2

EP 1 146 668 B1

FIG. 3

EP 1 146 668 B1

RECEIVED DATA

DATA CONFIGURING SECTION — 206

204 — DEMODULATOR

202 — DESPREADER

201

SPREAD CODE A1

207 — RECEPTION POWER MEASURING SECTION

205 — DEMODULATOR

203 — DESPREADER

SPREAD CODE A2

208 — RECEPTION POWER MEASURING SECTION

209 — RECEPTION POWER CONBINER

TRANSMITTING DATA

MODULATOR — 210

SPREADER — 211

SPREAD CODE B

TRANSMITTING POWER CONTROLLER — 212

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0987834 A
- JP HEI11337623 A

- JP 2000076032 A

**Non-patent literature cited in the description**

- Performance Analysis on OL-TPC based on Parallel Transmitted Midamble. 3GPP Draft: R1-99C19. MO-BILE COMPETENCE CENTER 650, 30 August 1999, vol. RAN WG1